# EUROPÄISCHE PATENTANMELDUNG

(11) **EP 1 992 779 A2**
(43) Veröffentlichungstag der Anmeldung: **19.11.2008**
(21) Anmeldenummer: 08007571.6
(22) Anmeldetag: 18.04.2008
(51) Int. Cl.: E06B 9/42

(54) **Auszugsprofil für Fensterblende**

(30) Priorität: 16.05.2007 DE 102007024250
(71) Anmelder: BOS GmbH & Co. KG, 73760 Ostfildern (DE)
(72) Erfinder: Hansen, Melf, 75053 Gondelsheim (DE); Coulibaly, Abdoul, 73760 Ostfildern (DE); Schlecht, Werner, 71665 Vaihingen/Enz (AT)
(74) Vertreter: Patentanwälte Ruff, Wilhelm, Beier, Dauster & Partner

(57) **Zusammenfassung**

Die Erfindung betrifft ein Auszugprofil (30) für eine Fensterblende eines Fahrzeugs mit zwei sich in einer Haupterstreckungsrichtung (2) erstreckenden Profilabschnitten (40, 50), die unter Einfassung eines vorzugsweise flexiblen Flächengebildes (20) der Fensterblende miteinander verbindbar sind, wobei Kontaktflächen (40a, 50a) beider Profilabschnitte (40, 50) einen Aufnahmeraum zur Aufnahme eines Endabschnitts des flexiblen Flächengebildes (20) begrenzen.

Erfindungsgemäß sind die Profilabschnitte (40, 50) über zugeordnete Verbindungsmittel (42, 46, 49, 52, 54, 59) form- oder kraftschlüssig zusammenfügbar.

Verwendung als leicht montierbares Auszugprofil.

## Beschreibung

Die Erfindung betrifft ein Auszugprofil für eine Fensterblende eines Fahrzeugs mit zwei sich in einer Haupterstreckungsrichtung erstreckenden Profilabschnitten, die unter Einfassung eines vorzugsweise flexiblen Flächengebildes der Fensterblende miteinander verbindbar sind, wobei Kontaktflächen beider Profilabschnitte einen Aufnahmeraum zur Aufnahme eines Endabschnitts des flexiblen Flächengebildes begrenzen.

Gattungsgemäße Auszugprofile sind aus dem Stand der Technik bekannt. Sie dienen der Handhabung von Fensterblenden, mittels derer Fenster eines Fahrzeugs zum Zwecke des Sicht- oder Sonnenschutzes abgedeckt werden können. Die Auszugprofile sind zu diesem Zweck am Ende des die eigentliche Blende bildenden Flächengebildes befestigt und werden gemeinsam mit diesem bewegt, wenn die Fensterblende aus einem Stauzustand in einen Funktionszustand oder aus dem Funktionszustand in den Stauzustand überführt wird. Im Stauzustand ist das Flächengebilde üblicherweise in der Art eines Rollos aufgerollt verstaut.

Bei den aus dem Stand der Technik bekannten Auszugprofilen handelt es sich um zweiteilige Profile, die das Ende des Flächengebildes einfassen und miteinander durch Ultraschallverschweißungen verbunden sind. Diese Technik ist bei Aufrechterhaltung der notwendigen Prozesssicherheit aufwändig und teuer, was als nachteilig angesehen wird.

### Aufgabe und Lösung

Aufgabe der Erfindung ist es daher, ein Auszugprofil zur Verfügung zu stellen, welches preisgünstig herzustellen und einfach zu montieren ist. Aufgabe ist weiterhin, ein Beschattungssystem mit einem solchen verbesserten Auszugprofil zur Verfügung zu stellen.

Diese Aufgabe wird dadurch gelöst, dass die Profilabschnitte über zugeordnete Verbindungsmittel form- oder kraftschlüssig zusammenfügbar sind. Die Profilabschnitte sind vorzugsweise in etwa gleich groß, insbesondere in etwa gleich lang in einer Haupterstreckungsrichtung. Ihre Länge kann jedoch auch in begrenztem Maße voneinander abweichen. Insbesondere kann einer der Profilabschnitte um ein geringes Maß länger ausgebildet sein, so dass dieser Profilabschnitt die beiden Enden des Auszugprofils bildet. Hierdurch ist es vermeidbar, das ästhetisch nachteilige Fügerillen zwischen den Profilabschnitten im Bereich der Enden des Auszugprofils gut sichtbar sind. Im Sinne dieser Erfindung sind die Verbindungsmittel der Profilabschnitte Abschnitte, die jeweils einem der Profilabschnitte zugeordnet sind und die zum Zusammenwirken miteinander ausgebildet sind. Dabei wirken Verbindungsmittel des einen Profilabschnitts mit Verbindungsmitteln des anderen Profilabschnitts derart zusammen, dass eine Koppelung der beiden Profilabschnitte hergestellt wird. Die Verbindungsmittel können unmittelbar mit dem ihnen jeweils zugeordneten Profilabschnitt verbunden oder im Zuge der Montage mit diesem verbindbar sein. Mittels der Verbindungsmittel kann ein erfindungsgemäßes Auszugprofil aus den beiden Profilabschnitten zusammengesetzt werden, die dabei durch ihre jeweiligen Kontaktflächen ein Aufnahmeraum definieren, in dem das flexible Flächengebilde aufgenommen werden kann. Vorzugsweise sind die Profilabschnitte im zusammengefügten Zustand im Bereich der Kontaktflächen derart voneinander beabstandet, dass das flexible Flächengebilde im Aufnahmeraum eingepresst vorliegt und somit eine kraftschlüssige Verbindung zwischen dem Profilabschnitten und dem Flächengebilde hergestellt wird.

Die kraft- und formschlüssigen Verbindungsmittel vereinfachen den Montageprozess deutlich und führen zu geringen Herstellungskosten. Darüber hinaus werden die in diesem Bereich nicht seltenen Qualitätsmängel vermieden, die auf das Ultraschallschweißen zurückzuführen sind. Um eine besonders sichere Verbindung zwischen den Profilabschnitten zu erhalten, verfügen die Profilabschnitte vorzugsweise über Verbindungsmittel, die sich entweder über einen erheblichen Teil in Haupterstreckungsrichtung erstrecken, oder die eine Vielzahl einzelner Verbindungselemente umfassen, die über die Länge der Profilabschnitte verteilt angeordnet sind.

Besonders bevorzugt sind Auszugprofile, bei denen die Verbindungsmittel Scharnierverbindungsmittel umfassen, mittels derer die Profilabschnitte im Zuge einer Montage des Auszugprofils derart zusammenfügbar sind, dass sie um eine vorzugsweise in Haupterstreckungsrichtung erstreckte Schwenkachse gegeneinander verschwenkbar sind. Die Scharnierverbindungsmittel sind so gestaltet, dass die getrennten Profilabschnitte unter Herstellung der Scharnierfunktion zusammengefügt werden können. Im einfachsten Fall kann eine derartige Scharnierfunktion dadurch erzielt werden, dass an einem der Profilabschnitte eine einseitig offene Nut vorgesehen ist, in die ein korrespondierender Steg des anderen Profilabschnitts eingeschoben werden kann. Unter Scharnierverbindungsmitteln sind im Zusammenhang mit dieser Erfindung auch solche Verbindungsmittel zu verstehen, bei denen es zur Aufrechterhaltung der Scharnierfunktion erforderlich ist, dass die Profilabschnitte in bestimmter Weise gehalten oder zusammengedrückt werden. Es ist demnach nicht erforderlich, dass die Scharnierverbindungsmittel im zusammengesetzten Zustand eine Trennung der Profilabschnitte voneinander verhindern können. Durch die Scharnierverbindungsmittel und die im zusammengefügten Zustand hergestellte Verschwenkbarkeit der Profilabschnitte zueinander wird erreicht, dass die Profilabschnitte sich in einer definierten Lage zueinander befinden, so dass ein anschließender Montageschritt, in dem die Profilabschnitte im aufeinandergeklappten Zustand durch weitere Verbindungsmittel miteinander verbunden werden, ohne weitere Notwendigkeit zum Ausrichten der Profilabschnitte zueinander durchgeführt werden kann. Bei bevorzugten Ausführungsformen bilden die Scharnierverbindungsmittel im montierten Zustand zusätzlich ein Haltemittel, welches eine Trennung der Profilabschnitte in Richtung orthogonal zu dem Kontaktflächen verhindert.

Alternativ zu den Scharnierverbindungsmitteln gemäß dieser Weiterbildung sind auch Ausführungsformen von der Erfindung umfasst, bei denen die beiden Profilabschnitte über ein Filmscharnier einstückig miteinander verbunden sind.

Bei einer Weiterbildung der Erfindung weisen die Verbindungsmittel Orthogonalverbindungsmittel auf, die durch Zusammendrücken der Profilabschnitte in einer Richtung orthogonal zu den Kontaktflächen in einen verbundenen Zustand überführbar sind. Die Kontaktflächen der Profilabschnitte müssen nicht zwingend vollständig eben sein, so dass unter einer Richtung, die orthogonal zu den Kontaktflächen ausgerichtet ist, im Sinne dieser Erfindung eine Richtung zu verstehen ist, die in etwa orthogonal zu den Abschnitten der Kontaktflächen ausgerichtet ist, die wiederum im Wesentlichen parallel zum Flächengebilde in seinem Funktionszustand ausgerichtet sind. Die Orthogonalverbindungsmittel können durch einfaches Zusammendrücken der Profilabschnitte miteinander verbunden werden. Im einfachsten Fall handelt es sich um zylindrische Einsteckabschnitte an einem der Profilabschnitte und korrespondierende Ausnehmung am anderen Profilabschnitt, so dass unter Bildung eines Presssitzes eine kraftschlüssige Verbindung geschaffen werden kann. Besonders vorteilhaft ist die Verbindung der Profilabschnitte über Orthogonalverbindungsmittel bei solchen Auszugprofilen, bei denen auch Scharnierverbindungsmittel vorgesehen sind. Die Scharnierverbindungsmittel können dabei zunächst dazu dienen, eine gewünschte Relativposition der Profilabschnitte zueinander zu gewährleisten, so dass anschließend die Profilabschnitte zueinander verschwenkt werden können, bis sie durch die Orthogonalverbindungsmittel in einen fest zusammengefügten Zustand gebracht werden. Diese Gestaltung mit Scharnierverbindungsmittel und Orthogonalverbindungsmitteln ist im Hinblick auf eine leichte und schnelle Montierbarkeit vorteilhaft.

Bei einer Weiterbildung der Erfindung umfassen die Orthogonalverbindungsmittel an einem der Profilabschnitte eine Rastnase und am anderen Profilabschnitt ein Rastschwelle, wobei die Rastnase im Zuge des Zusammendrückens elastisch auslenkbar ist, so dass sie hinter der Rastschwelle einrasten kann. Vorteilhaft ist eine Ausgestaltung mit mehreren Rastnasen und Rastschwellen, wobei die Rastnasen vorzugsweise zur Auslenkung beim Verrasten in verschiedene Richtungen ausgebildet sind. Die Verbindung der Profilabschnitte über Rastnasen und Rastschwellen oder über anderweitige Rastmittel stellt eine einfache und kostengünstige Form der Gestaltung dar. Insbesondere ist durch eine Verrastung gewährleistet, dass sich die Profilabschnitte bei der bestimmungsgemäßen Verwendung aufgrund ihrer formschlüssigen Rastkopplung nicht mehr voneinander lösen.

Bei einer bevorzugten Ausführungsform ist die Rastnase derart angeordnet ausgebildet, dass sie im Zuge des Zusammendrückens durch die Rastschwelle in Richtung oder entgegen der Richtung der Scharnierverbindungsmittel elastisch ausgelenkt wird. Eine derartige Rastnase ist demnach so angeordnet und ausgebildet, dass sie gemeinsam mit den Scharnierverbindungsmitteln wirksam einer Relativverschiebung der Profilabschnitte gegeneinander in der Ebene der Kontaktflächen entgegenwirken kann.

Bei einer besonders bevorzugten Ausführungsform weisen die Orthogonalverbindungsmittel an einem der Profilabschnitte einen zylindrischen Abschnitt auf, der sich in Richtung einer Flächennormalen der Kontaktfläche des Profilabschnitts zum anderen Profilabschnitt erstreckt und am anderen Profilabschnitte einen Klemmabschnitt mit mindestens zwei aufeinander zu gerichteten und auslenkbaren Klemmzungen, die derart angeordnet und ausgebildet sind, dass zwischen den Klemmzungen in einem unausgelenkten Zustand ein Aufnahmeraum gebildet wird, dessen Querschnitt kleiner als der Querschnitt des zylindrischen Abschnitts ist. Vorzugsweise sind die Profilabschnitte mit mehreren derartigen zylindrischen Abschnitten und mehreren Klemmabschnitten ausgebildet. Der zylindrische Abschnitt hat vorzugsweise einen runden Querschnitt, kann jedoch auch eine andere Querschnittsform, beispielsweise die Form eines Mehrecks haben. Die Querschnittsfläche ist so bemessen, dass der zylindrische Abschnitt beim Einführen zwischen die Klemmzungen diese auslenkt, so dass die Klemmzungen beim weiteren Einschieben des zylindrischen Abschnitts gegen eine Mangelfläche des zylindrischen Abschnitts gedrückt werden. Besonders vorteilhaft ist es, wenn die Klemmzungen aus einem Material bestehen, welches härter als der zylindrische Abschnitt ist, so dass sie sich in begrenztem Maße in den zylindrischen Abschnitt eindrücken und dadurch eine Art Widerhakenfunktion ausüben. Bei einer besonders bevorzugten Gestaltung ist der Klemmabschnitt metallisch ausgebildet und mit einem ihm zugeordneten Profilabschnitt verbunden, der aus Kunststoff besteht.

Bei einer Weiterbildung der Erfindung weist das Auszugprofil Schiebeführungsverbindungsmittel auf, die ein Einschieben des einen Profilabschnitts in den anderen Profilabschnitt in der Ebene der Kontaktflächen ermöglichen, wobei die Schiebeführungsverbindungsmittel vorzugsweise derart ausgebildet sind, dass sie im eingeschobenen Zustand einen Presssitz bilden, der einem Lösen der Profilabschnitte voneinander entgegenwirkt. Die Schiebeführungsverbindungsmittel sind bei dieser Weiterbildung so ausgebildet, dass der eine Profilabschnitt an den anderen Profilabschnitt angesetzt werden kann und dann eine Relativverschiebung in der Ebene der Kontaktflächen durchgeführt wird, durch die die Profilabschnitte ineinander geschoben werden. Eine Gestaltung, bei der die Profilabschnitte so dimensioniert sind, dass dabei ein Presssitz zustande kommt, ermöglicht dabei je nach Ausgestaltungsform den Verzicht auf weitere Verbindungsmittel.

Bei einer Variante eines Auszugprofils mit Schiebeführungsverbindungsmitteln sind die Schiebeführungsverbindungsmittel derart ausgebildet, dass einer der Profilabschnitte in einer von der Haupterstreckung abweichenden Einschieberichtung, vorzugsweise in einer zur Haupterstreckungsrichtung orthogonalen Einschieberichtung in den anderen Profilabschnitt einschiebbar ist. Bei einer solchen Ausgestaltung werden die Profilabschnitte vorzugsweise über ihre kurze Seite und damit orthogonal zur Haupterstreckungsrichtung gegeneinander verschoben, so dass die Einschiebestrecke vergleichsweise kurz ist. Dies erleichtert die Montage. Eine Ausgestaltung eines derartigen Auszugprofils weist zum einen zwei Aufnahmen auf, die in Einschieberichtung oder entgegen der Einschieberichtung offen sind und die in Einschieberichtung voneinander beabstandet sind. Zum anderen weist eine solche Ausführungsform zwei Einfügeabschnitte zur Aufnahme in den Aufnahmen auf. Bei einer solchen Gestaltung werden die Profilabschnitte zur Zusammenfügung zunächst aneinandergelegt, so dass jeweils ein Einfügeabschnitt im Bereich der offenen Seite eine Aufnahme angeordnet ist. Dann werden die Profilabschnitte derart gegeneinander verschoben, dass die beiden Einfügeabschnitte in die Aufnahmen hineingedrückt werden. Hierdurch wird eine Verbindung zwischen den Profilabschnitten hergestellt, die im Wesentlichen nur durch eine Verschiebung der Profilabschnitte entgegen ihrer Einschieberichtung wieder gelöst werden kann. Ein besonders guter Halt wird erreicht, wenn die Aufnahmen und die Einfügeabschnitte sich als Nuten und Einfügestege über die Gesamtlänge oder annähernd die Gesamtlänge der Profilabschnitte erstrecken. Besonders bevorzugt sind Ausführungsformen, bei denen die Aufnahmen an einem der Profilabschnitte vorgesehen sind und in die gleiche Richtung offen ausgebildet sind, während die Einfügeabschnitte am anderen Profilabschnitt vorgesehen sind.

Eine alternative Ausführungsform eines Auszugprofils mit Schiebeführungsverbindungsmitteln sieht vor, dass diese derart ausgebildet sind, dass einer der Profilabschnitte in Haupterstreckungsrichtung in den anderen Profilabschnitt einschiebbar ist. Bei dieser Ausgestaltung erstrecken sich die Schiebeführungsverbindungsmittel vorzugsweise über die gesamte Länge oder annähernd die gesamte Länge der Profilabschnitte. Die Schiebeführungsverbindungsmittel sind zumindest an einem der Profilabschnitte an ihrem Ende offen ausgebildet, so dass der andere Profilabschnitt an dieser Stelle einschiebbar ist. Er kann dann über die gesamte Länge des mit dem offenen Schiebeführungsverbindungsmittel ausgebildeten Profilabschnitts in Haupterstreckungsrichtung verschoben werden, bis die Profilabschnitte in etwa deckungsgleich übereinander liegen. Besonders vorteilhaft an der Ausgestaltung der Profilabschnitte mit Schiebeführungsverbindungsmitteln, die ein Einschieben eines Profilabschnitts in Haupterstreckungsrichtung gestatten, ist, dass ein besonders stabiler Halt der Profilabschnitte aneinander gewährleistet ist, da die Verbindungsmittel bei der bevorzugten Ausführungsform sich lückenlos über die gesamte Länge der Profilabschnitte erstrecken.

Eine Weiterbildung sieht vor, dass sie Schiebeführungsverbindungsmittel an einem der Profilabschnitte zwei in Haupterstreckungsrichtung erstreckte Nuten aufweisen, deren offene Seiten in entgegengesetzte Richtung weisen und dass am anderen Profilabschnitt Eingriffsabschnitte zur Aufnahme in den Nuten vorgesehen sind. Die Nuten an dem einen Profilabschnitt sind vorzugsweise so ausgebildet, dass ihre offenen Seiten aufeinander zu weisen. Korrespondierend hierzu sind am anderen Profilabschnitt die Eingriffsabschnitte in voneinander wegweisende Richtung ausgebildet. Vorzugsweise erstreckt sich sowohl die Öffnungsrichtung der Nuten als auch die Erstreckungsrichtung der Eingriffsabschnitte parallel zur Ebene der Kontaktflächen. Die Gestaltung mit zwei Nuten an einem der Profilabschnitte und zwei Eingriffsabschnitten am anderen Profilabschnitt ist preisgünstig herzustellen und vorteilhaft bei der Verwendung.

Bei einer Variante hiervon weisen die Nuten und die Eingriffsabschnitte jeweils mindestens zwei miteinander fluchtende Nutabschnitte bzw. Eingriffabschnitte auf, wobei zwischen den Nutabschnitten jeweils eine Beabstandung in Haupterstreckungsrichtung liegt, deren Länge größer oder gleich der Länge der Eingriffsabschnitte ist. Bei einer solchen Ausgestaltung sind die Nuten und die Eingriffsabschnitte derart ausgestaltet, dass sie sich in Haupterstreckungsrichtung mit Beabstandungen abwechseln, in denen keine Nutabschnitte bzw. keine Eingriffsabschnitte vorgesehen sind. Diese Ausgestaltung erlaubt es, die Profilabschnitte in Haupterstreckungsrichtung ineinander zu schieben, ohne dass die Profilabschnitte hierzu über ihre gesamte Länge gegeneinander verschoben werden müssen. Stattdessen können die Eingriffsabschnitte im Bereich der Beabstandung zwischen Nutabschnitten eingelegt werden und dann in die Nutabschnitte eingeschoben werden. Bei Profilabschnitten mit beispielsweise drei Nutabschnitten je Nut kann die Verschieberichtung der Profilabschnitte zur Zusammenfügung etwa auf ein Drittel der Gesamtlänge der Profilabschnitte verringert werden.

Bei einer Weiterbildung der Erfindung weisen die Schiebeführungsverbindungsmittel an einem der Profilabschnitte eine Arretierausnehmung auf, die in Richtung des anderen Profilabschnitts offen ist, und am anderen Profilabschnitt ein Arretierabschnitt zur Aufnahme in der Arretierausnehmung. Dabei sind die Arretierausnehmung und der Arretierabschnitt derart angeordnet, dass der Arretierabschnitt in die Arretierausnehmung einrasten kann, sobald der eine Profilabschnitt vollständig in den anderen Profilabschnitt eingeschoben ist. Die Gestaltung eines Auszugprofils mit Schiebeführungsverbindungsmitteln unter Verwendung einer Arretierausnehmung und eines Arretierabschnitts erlaubt es, in der Endlage bezüglich des Einschiebens einen zusätzlichen Halt zwischen den Profilabschnitten zu erzielen. Die Arretierausnehmung und Arretierabschnitt sind dabei vorzugsweise so ausgebildet, dass der Arretierabschnitt in einer Richtung orthogonal zu den Kontaktflächen in die Arretierausnehmung einrücken kann. Damit dies erreicht wird, ist der Arretierabschnitt derart dimensioniert, dass er beim Einschieben der Profilabschnitte ineinander vor dem Einschnappen in die Arretierausnehmung eine elastische Verformung eines oder beider Profilabschnitte bewirkt. Erst wenn er in den Bereich der Arretierausnehmung gelangt und in dieser einschnappt, entfällt diese elastische Verformung.

Bei einer Weiterbildung der Erfindung ist zumindest ein Teil der Verbindungsmittel mit dem zugeordneten Profilabschnitt einstückig verbunden. Diese besonders einfache Ausgestaltung ist im Hinblick auf eine wirtschaftliche Fertigung besonders vorteilhaft. Je nach Ausgestaltung des Auszugprofils können alle Verbindungsmittel jeweils einstückig mit dem ihnen zugeordneten Profilabschnitt verbunden sein.

Bei einer besonderen Ausführungsform eines erfindungsgemäßen Auszugprofils ist zumindest ein Teil der Verbindungsmittel an mindestens einem separaten Verbindungsabschnitt vorgesehen, wobei der separate Verbindungsabschnitt mit dem diesem Teil der Verbindungsmittel zugeordneten Profilabschnitt verbindbar ausgebildet ist. Bei einer solchen Ausgestaltung sind einzelne Verbindungsmittel nicht unmittelbar einstückig an dem ihnen zugeordneten Profilabschnitt vorgesehen, sondern mit diesem verbindbar, bevor der Profilabschnitt mit dem anderen Profilabschnitt verbunden wird. Diese Gestaltung mit einem separaten Verbindungsabschnitt oder mehreren solchen erlaubt zum einen die Verwendung von Geometrien, die mit den üblicherweise verwendeten Kunststoff-Fertigungsverfahren einstückig nicht herstellbar oder teuer sind. Zum anderen ist es die Gestaltung einzelner Verbindungsmittel an separaten Verbindungsabschnitten die Möglichkeit gegeben, verschiedene Materialien zu verwenden, wobei bevorzugte Ausführungsformen insbesondere vorsehen, dass die separaten Verbindungsabschnitte und die an ihnen vorgesehenen Verbindungsmittel metallisch sind, während die Profilabschnitte selbst aus Kunststoff bestehen. Die Kombination dieser verschiedenen Werkstoffe erlaubt die Herstellung von leichten Auszugprofilen, deren Profilabschnitte besonders fest miteinander verbunden sind.

Insbesondere vorteilhaft ist die Gestaltung mit einem separaten, vorzugsweise metallischen, Verbindungsabschnitt bei Orthogonalverbindungsmitteln mit einem Klemmabschnitt mit auslenkbaren Klemmzungen, die zum Zusammenwirken mit einem zylindrischen Abschnitt am gegenüberliegenden Profilabschnitt vorgesehen sind. Bei diesen Orthogonalverbindungsmitteln kann durch die metallische Gestaltung der Klemmzungen erreicht werden, dass die Klemmzungen sich vorteilhaft in den aus Kunststoff bestehenden Zylinderabschnitt eindrücken können, wodurch eine unter normalen Betriebsbedingungen kaum noch zerstörungsfrei lösbare Verbindung der Profilabschnitte hergestellt wird.

Der separate Verbindungsabschnitt ist vorzugsweise durch eine Schiebeführung an dem zugeordneten Profilabschnitt befestigbar, wobei die Schiebeführung derart ausgebildet sein kann, dass der Verbindungsabschnitt in der Ebene der Kontaktflächen und orthogonal zur Haupterstreckungsrichtung in den Profilabschnitt einschiebbar ist. Die Schiebeführung ist vorzugsweise derart ausgebildet, dass der Verbindungsabschnitt im eingeschobenen Zustand mit der Schiebeführung einen Presssitz bildet, der einem Herausgleiten des Verbindungsabschnitts entgegenwirkt. Bei einer besonders bevorzugten Ausgestaltung weist die Schiebeführung auf Seiten des Profilabschnitts Aufnahmenuten auf, in die Stege des Verbindungsabschnitts eingeschoben werden. Eine besonders vorteilhafte Ausgestaltung, um einen Presssitz zu erzielen, sieht vor, dass die Stege des Verbindungsabschnitts, die in die profilabschnittsseitige Nuten eingefügt werden, bezüglich ihrer Dicke elastisch verformbar sind, beispielsweise durch eine Ausgestaltung als leicht gebogenes Blechteil.

Besonders bevorzugt werden Auszugprofile, bei denen die Kontaktflächen derart geformt sind, dass der Querschnitt des zwischen ihnen angeordneten Aufnahmeraums für das Flächengebilde mindestens eine Richtungsänderung, vorzugsweise zwei oder mehr Richtungsänderungen aufweist, wobei die Richtungsänderungen mehr als 45° betragen, vorzugsweise 90° oder mehr. Eine derartige Gestaltung der Kontaktflächen führt dazu, dass der Aufnahmeraum eine Labyrinthführung bildet, in die das Flächengebilde eingelegt werden kann. Dies stellt einen wirksamen Schutz gegen ein Herausrutschen des Flächengebildes aus dem Aufnahmeraum dar. Besonders bevorzugt sind Ausführungsformen, die mehrere Richtungsänderungen aufweisen, die vorzugsweise in verschiedene Richtungen verlaufen. Vorteilhaft ist auch eine Gestaltung des Aufnahmeraums mit einer an einem Profilabschnitt vorgesehenen Nut, in die das Flächengebilde durch einen am anderen Profilabschnitt vorgesehenen Steg eingedrückt wird.

Bei einer Weiterbildung der Erfindung sind an mindestens einem der Profilabschnitte Eindringabschnitte vorgesehen, die sich in den Aufnahmeraum für das Flächengebilde erstrecken. Diese Eindringabschnitte sind vorzugsweise länglich ausgebildet, beispielsweise als Eindringstifte oder Eindringspitzen. Je nach Art des verwendeten Flächengebildes ist es vorteilhaft, wenn die Eindringabschnitte scharfkantig ausgebildet sind, um in das Flächengebilde eindringen zu können. Die Eindringabschnitte bieten somit zusätzlichen Halt gegen ein Herausrutschen des Flächengebildes aus dem Auszugprofil. Besonders bevorzugt ist die Verwendung von Eindringabschnitten bei einem textilen Flächengebilde, bei dem die Eindringstifte in das Gewirk oder Gewebe eindringen können. Die Eindringabschnitte sind vorzugsweise einstückig mit dem zugeordneten Profilabschnitt ausgebildet, können jedoch auch als separate Bauteile vorgesehen sein.

Die Erfindung umfasst darüber hinaus ein Beschattungssystem, bestehend aus einem Flächengebilde und einem Auszugprofil der oben beschrieben Art, wobei das Auszugprofil am Ende des Flächengebildes durch Einfassung des Flächengebildes fest mit diesem verbunden ist. Dabei ist es besonders von Vorteil, wenn das Flächengebilde im Bereich von Verbindungsmitteln des Auszugprofils Ausnehmungen aufweist. Solche Ausnehmungen erlauben es, dass Verbindungsmittel beider Profilabschnitte unmittelbar miteinander verbunden werden, ohne dass im Verbindungsbereich zwischen ihnen das Flächengebilde angeordnet ist. Erfindungsgemäße Ausnehmungen sind insbesondere im Bereich von Orthogonalverbindungsmitteln zweckmäßig. Von Vorteil ist es, wenn die Ausnehmungen allseitig vom Flächengebilde umgeben werden, so dass sie einen zusätzlichen Schutz gegen ein Herausrutschen des Flächengebildes aus dem Auszugprofil darstellen.

Bei einer besonders bevorzugten Ausführungsform ist das Flächengebilde mit einem der Profilabschnitte stoffschlüssig, vorzugsweise mittels einer Klebeverbindung oder einer Schweißverbindung, verbunden. Eine solche stoffschlüssige Verbindung des Flächengebildes mit einem der Profilabschnitte hat zum einen die Wirkung, dass ein Herausrutschen des Flächengebildes aus dem Auszugprofil erschwert wird. Zum anderen ist eine derartige stoffschlüssige Verbindung jedoch auch während der Montage von Vorteil. So ist es bei einer vorteilhaften Vorgehensweise der Montage vorgesehen, dass das Flächengebilde zunächst mit einem der Profilabschnitte stoffschlüssig verbunden wird, so dass es in einer definierten Lage ist, wenn dieser Profilabschnitt mit dem anderen Profilabschnitt mittels der Verbindungsmittel verbunden wird.

### Kurzbeschreibung der Zeichnungen

Weitere Vorteile und Merkmale der Erfindung ergeben sich aus den Ansprüchen sowie der nachfolgenden Beschreibung bevorzugter Ausführungsbeispiele der Erfindung, die anhand der Zeichnungen dargestellt sind. Dabei zeigt:
- Fig. 1: ein erfindungsgemäßes Beschattungssystem in seiner Einbausituation in einer Fahrzeugtür,
- Fig. 2a, 2b: eine erste Ausführungsform eines erfindungsgemäßen Auszugprofils,
- Fig. 3a, 3b: eine zweite Ausführungsform eines erfindungsgemäßen Auszugprofils,
- Fig. 4a, 4b: eine dritte Ausführungsform eines erfindungsgemäßen Auszugprofils,
- Fig. 5a, 5b: eine vierte Ausführungsform eines erfindungsgemäßen Auszugprofils und
- Fig. 6a, 6b: eine fünfte Ausführungsform eines erfindungsgemäßen Auszugprofils.

### Detaillierte Beschreibung der Ausführungsbeispiele

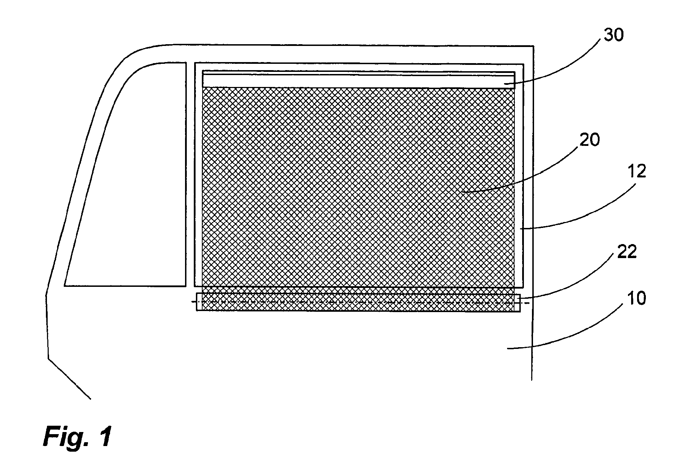

Fig. 1 zeigt ein erfindungsgemäßes Beschattungssystem, welches in einer Fahrzeugtür 10 eines Fahrzeugs eingesetzt ist, um als Sonnenschutzblende für ein Fahrzeugfenster 12 zu agieren. Das Beschattungssystem weist ein flexibles Flächengebilde 20 auf, welches in einem nicht dargestellten Stauzustand auf einer Rollowelle 22 aufgerollt ist. In dem dargestellten Funktionszustand ist das Flächengebildes 20 von der Rollowelle nach oben abgerollt. Am oberen Ende des Flächengebildes 20 ist ein formstabiles Auszugprofil 30 vorgesehen. Dieses gibt dem flexiblen Flächengebilde seine Form und ermöglicht eine bequeme manuelle Handhabung des Beschattungssystems. Das Auszugprofil 30 kann auf unterschiedliche Weise ausgebildet sein.

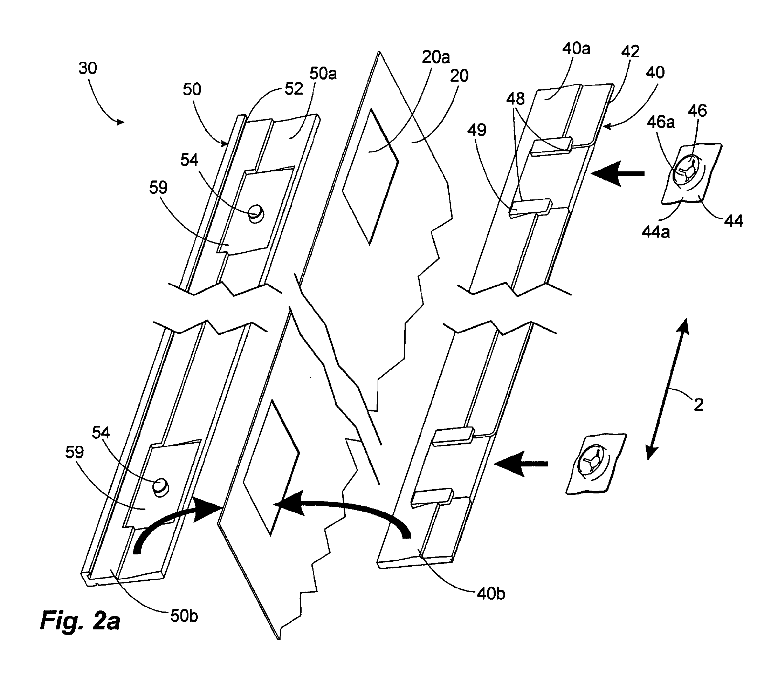

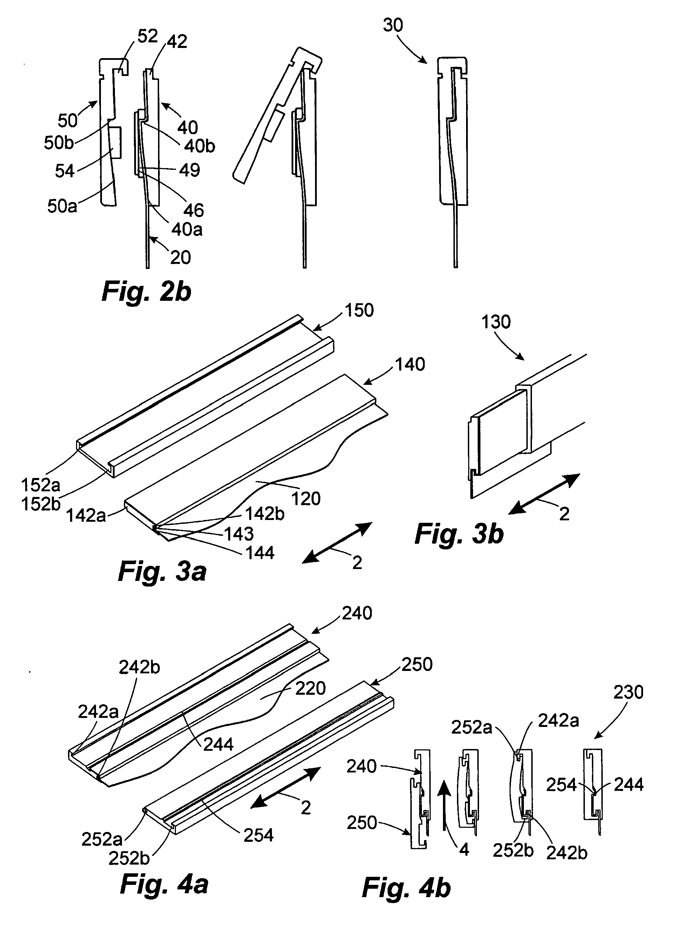

Die Fig. 2 bis 6 zeigen verschiedene Auszugprofile 30, 130, 230, 330, 430. Diese unterscheiden sich vor allem in der Art der Verbindungsmittel, mittels derer die Profilabschnitte der Auszugsprofile miteinander verbunden sind.

Das Auszugprofil 30, welches in der Fig. 2a dargestellt ist, weist zwei Profilabschnitte 40, 50 auf, die beide aus Kunststoff gefertigt sind. Diese Profilabschnitte 40, 50 weisen jeweils eine Klemmfläche 40a, 50a auf, wobei diese Klemmflächen dafür vorgesehen sind, in einem zusammengesetzten Zustand der Profilabschnitte 40, 50 beidseitig an einem oberen Ende des Flächengebildes 20 anzuliegen und dieses dadurch zwischen den Profilabschnitten 40, 50 festzuklemmen. Im Bereich der Klemmflächen 40a, 50a sind jeweils eine Schwelle 40b, 50b vorgesehen, um das Flächengebilde 20 daran umzulenken. Zur Verbindung der Profilabschnitte 40, 50 miteinander sind eine Reihe von Verbindungsmitteln vorgesehen. So ist am Profilabschnitt 50 eine sich über die vollständige Länge erstreckende Nut 52 vorgesehen, die sich in der Ebene und in Richtung der Klemmfläche 50a öffnet. Korrespondierend hierzu ist am Profilabschnitt 40 ein sich ebenfalls über die gesamte Länge erstreckender Einfügesteg 42 vorgesehen. Weiterhin sind am Profilabschnitt 50 mehrere Zylinderabschnitte 54 vorgesehen, die sich in etwa in einer Richtung orthogonal zu der Kontaktfläche 50a vom Profilabschnitt 50 aus erstrecken. Die Zylinderabschnitte 54 sind dabei jeweils in Ausnehmungen 59 angeordnet. Korrespondierend zu den Zylinderabschnitten 54 sind Klemmabschnitte 46 mit nach innen weisenden Klemmzungen 46a vorgesehen. Diese Klemmabschnitte 46 sind nicht unmittelbar am innen zugeordneten Profilabschnitt 40 vorgesehen, sondern sind auf gesonderten metallischen Verbindungsabschnitten 44 angeordnet, wobei die metallischen Verbindungsabschnitte 44 in Nuten 48 des Profilabschnitts 40 einschiebbar sind. Benachbart zu den Nuten 48 sind Arretierblöcke 49 am zweiten Profilabschnitt 40 angeformt. Diese sind so ausgebildet angeordnet, dass sie im zusammengefügten Zustand der Profilabschnitte 40, 50 in die Ausnehmungen 59 am zweiten Profilabschnitt 50 Platz eingerückt sind und dadurch verhindert, dass die Profilabschnitte im zusammengefügten Zustand durch Herausschieben der Verbindungsabschnitte 44 aus den Nuten 48 voneinander gelöst werden können. In dem Bereich, in dem die Klemmabschnitte 46 und die Zylinderabschnitte 54 zusammengefügt werden und durch den hindurch die Arretierblöcke 49 in die Ausnehmungen 59 eingeschoben werden, sind im flexiblen Flächengebilde 20 Ausnehmungen 20a vorgesehen.

Die Art des Zusammenfügens des Auszugprofils der Fig. 2a ist in der Fig. 2b dargestellt. Um die Profilabschnitte 40, 50 zusammenzufügen, wird zunächst das Flächengebilde 20 im Bereich der Kontaktfläche 40a auf den Profilabschnitt 40 aufgelegt. Anschließend wird der Verbindungssteg 42 des Profilabschnitts 40 in die Nut 52 des Profilabschnitts 50 eingefügt. In diesem Zustand bilden der Verbindungssteg 42 und die Nut 52 eine Art Scharnieranordnung, die eine in Richtung der Haupterstreckungsrichtung 2 verlaufende Schwenkachse definiert. Um diese Schwenkachse können die Profilabschnitte 40, 50 dann gegeneinander verschwenkt werden, bis die Zylinderabschnitte 54 durch die Ausnehmungen 20a im flexiblen Flächengebilde 20 hindurch in die Klemmabschnitte 46 hineingedrückt werden. Dort lenken die Zylinderabschnitte 54 die Klemmzungen 46a aus, während sie in die Klemmabschnitt 46 eingedrückt werden. Die metallischen Klemmzungen 46a drücken sich dadurch in die Mantelflächen der Zylinderabschnitte aus Kunststoff hinein und verhindern wirksam ein nachfolgendes Herausziehen der Zylinderabschnitte aus den Klemmabschnitten 46. Die Profilabschnitte 40, 50 werden mit einer Betätigungskraft zusammengedrückt, durch die gewährleistet ist, dass das flexible Flächengebilde 20 flächig und unter Druck an den Kontaktflächen 40a und 50a anliegt und insbesondere im Bereich der Umlenkschwellen 40b, 50b umgelenkt ist.

Durch die über die Kontaktflächen 40a, 50a auf das flexible Flächengebilde wirkende Kraft und die Gestaltung des Flächengebildes 20 mit Ausnehmungen 20a ist eine sichere Verbindung zwischen dem Flächengebilde 20 und der Auszugprofil 30 gewährleistet. Hierzu trägt auch die Labyrinthführung bei, die durch die Schwellen 40b, 50b an den Kontaktflächen 40a, 50a gebildet wird.

Eine zweite Ausführungsform ist in den Fig. 3a, 3b dargestellt. Bei dieser zweiten Ausführungsform sind wiederum zwei Profilabschnitte 140, 150 vorgesehen, wobei der Profilabschnitt 150 als C-förmiges Profil mit aufeinander zu gewandten Nuten 152a, 152b ausgebildet ist. Korrespondierend zu diesen Nuten 152a, 152b weist der Profilabschnitt 140 außenliegende Stege 142a, 142b auf, die in entgegengesetzte Richtungen weisen und entsprechend den Nuten 152a, 152b voneinander beabstandet sind. Auf der Seite des Stegs 142b ist darüber hinaus ein Umlenkabschnitt 144 vorgesehen, der sich in die gleiche Richtung wie der Steg 142b erstreckt. Zwischen dem Steg 142b und dem Umlenkabschnitt 144 befindet sich eine Nut 143.

Zum Zusammenführen des Auszugprofils 130 wird zunächst das flexible Flächengebilde 120 auf den Profilabschnitt 140 aufgelegt und in die Nut 143 eingedrückt. In nicht dargestellter Art und Weise wird das Flächengebilde weiterhin in dieser aufgelegten Lage mit dem Profilabschnitt 140 punktuell verklebt. Anschließend wird das Bauteil, bestehend aus dem Profilabschnitt 140 und dem flexiblen Flächengebilde 120 in Haupterstreckungsrichtung 2 in den Profilabschnitt 150 eingeschoben. Die Profilabschnitte 140, 150 sind unter Einbeziehung des flexiblen Flächengebildes 120 dabei so bemessen, dass sie im zusammengefügten Zustand einen Presssitz bilden, der zu einem nur schwer lösbaren Auszugprofil führt. Neben diesem Presssitz und den Verschweißungen des Flächengebildes 120 am Profilabschnitt 140 ist auch die Formgebung des Aufnahmeraums, in dem sich das Flächengebilde 120 innerhalb des Auszugprofils 130 befindet, für eine große Stabilität verantwortlich. Aufgrund der viermaligen Umlenkung des Flächengebildes am Steg 142b und dem Umlenkabschnitt 144 um jeweils 90° werden hohe Haltekräfte verursacht, die einem Herausziehen des Flächengebildes aus dem Auszugprofil 130 entgegenwirken.

Bei der Ausführungsform des Fig. 4a und 4b besteht das Auszugprofil 230 wiederum aus zwei Profilabschnitten 240, 250. Am Profilabschnitt 250 sind zwei Aufnahmenuten 252a, 252b vorgesehen, wobei jeweils ein korrespondierender Verbindungssteg 242a, 242b am Profilabschnitt 240 vorgesehen ist. Darüber hinaus ist am Profilabschnitt 250 ein sich über die vollständige Länge des Profilabschnitts 250 erstreckender Arretiersteg 254 vorgesehen, zu dem korrespondierend an der Innenseite des Profilabschnitts 240 eine Arretierausnehmung 244 vorgesehen ist.

Die Fig. 4b verdeutlicht die Montage des Auszugprofils 230. Wiederum wird zunächst ein flexibles Flächengebilde 220 auf dem einen Profilabschnitt 240 angeordnet, wobei optional auch eine Verklebung oder Verschweißung am Profilabschnitt 240 möglich ist. Anschließend wird der Profilabschnitt 250 in einer Einfügerichtung 4 auf den Profilabschnitt 240 aufgeschoben, wobei die beiden Verbindungsstege 242a, 242b in die korrespondierenden Nuten 252a, 252b eingeführt werden. Da sich vor Beendigung dieses Montageschritts der Arretiersteg 254 noch nicht auf Höhe der Arretierausnehmung 244 befindet, kommt es zu einer elastischen Verformung des Profilabschnitts 240 und/oder des Profilabschnitts 250. Erst wenn im Zuge des Aufschiebens des Profilabschnitts 250 auf den Profilabschnitt 240 die Endlage erreicht ist, rastet der Arretiersteg 254 in die Arretierausnehmung 244 ein, so dass ein Trennen der Profilabschnitte 240, 250 entgegen der Einschieberichtung 4 nachfolgend nicht mehr möglich ist.

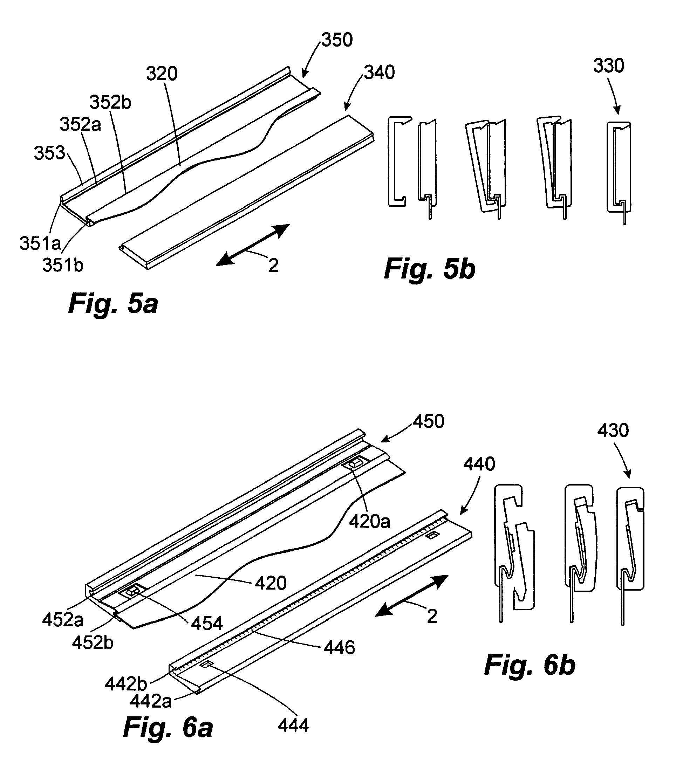

Die Fig. 5a und 5b zeigen eine weitere Ausführungsform eines erfindungsgemäßen Auszugprofils 330. Bei dieser Ausführungsform ist der erste Profilabschnitt 350 wiederum etwa C-förmig ausgebildet. Abweichend vom Profilabschnitt 150 des Auszugprofils 130 weist jedoch an einem der Schenkel 351 a, 351 b, die jeweils eine Nut 352a, 352b definieren, eine Einlaufschräge 353 einer Rastnase auf. Diese Einlaufschräge 353 erlaubt es, nach Einlegen des flexiblen Flächengebildes 320 in das C-Profil 350, den zweiten Profilabschnitt 340 zunächst in die Nut 352b einzusetzen und dann zu verschwenken, bis der Profilabschnitt 240 nach Auslenkung des Schenkels 351a mittels der Einlaufschräge 353 auch in die zweite Nut 352a einschnappt.

Die Ausführungsform der Fig. 6a und 6b entspricht weitgehend der Ausführungsform der Fig. 4a und 4b. Wiederum weist einer der beiden Profilabschnitte 440, 450 des Auszugprofils 430 zwei Nuten 452a, 452b auf, die in identischer Richtung offen sind. Entgegen dieser Richtung kann der zweite Profilabschnitt 440 mit zwei an ihm vorgesehenen Verbindungsstegen 442a, 442b in diese Nuten eingedrückt werden. Wie auch bei der Ausführungsform der Fig. 4a und 4b sind Arretierungsverbindungselemente 444, 454 vorgesehen, die im vollständig eingeschobenen Zustand eine zusätzliche Verbindung zwischen den Profilabschnitten 440, 450 herstellen. Diese Arretierungsverbindungsmittel umfassen Ausnehmungen 444 auf Seiten des Profilabschnitts 440 und Arretierungserhebungen 454 auf Seiten des Profilabschnitts 450. Im Bereich der Arretierverbindungsmittel 444, 454 ist das zwischen den Profilabschnitten 440, 450 einzulegende flexible Flächengebilde 420 mit Ausnehmungen 420a versehen.

Abweichend von der Ausführungsform der Fig. 4a und 4b sind an dem Verbindungssteg 442b Eindringstifte 446 vorgesehen, die sich im Zuge des Zusammenfügens der Profilabschnitte 440, 450 in das flexible Flächengebilde hineindrücken und somit eine zusätzliche Sicherung gegen ein versehentliches Herausziehen des flexiblen Flächengebildes 420 aus dem Auszugprofil 430 bilden.

## Patentansprüche

1. Auszugprofil (30; 130; 230; 330; 430) für eine Fensterblende eines Fahrzeugs mit zwei sich in einer Haupterstreckungsrichtung (2) erstreckenden Profilabschnitten (40, 50; 140, 150; 240, 250; 340, 350; 440, 450), die unter Einfassung eines vorzugsweise flexiblen Flächengebildes (20; 120; 220; 320; 420) der Fensterblende miteinander verbindbar sind, wobei Kontaktflächen (40a, 50a) beider Profilabschnitte einen Aufnahmeraum zur Aufnahme eines Endabschnitts des flexiblen Flächengebildes begrenzen,
**dadurch gekennzeichnet, dass**
die Profilabschnitte über zugeordnete Verbindungsmittel (42, 46, 49, 52, 54, 59; 142a, 142b, 152a, 152b; 242a, 242b, 244, 252a, 252b, 254, 352a, 352b, 353, 342a, 342b; 442a, 442b, 452a, 452b, 444, 454) form- oder kraftschlüssig zusammenfügbar sind.

2. Auszugprofil nach Anspruch 1,
**dadurch gekennzeichnet, dass**
die Verbindungsmittel Scharnierverbindungsmittel (42, 52; 352b) umfassen, mittels derer die Profilabschnitte (40, 50; 340, 350) im Zuge einer Montage des Auszugprofils (30; 330) derart zusammenfügbar sind, dass sie um eine vorzugsweise in Haupterstreckungsrichtung (2) erstreckte Schwenkachse gegeneinander verschwenkbar sind.

3. Auszugprofil nach Anspruch 1 oder 2,
**dadurch gekennzeichnet, dass**
die Verbindungsmittel Orthogonalverbindungsmittel (54, 46; 352a) umfassen, die durch Zusammendrücken der Profilabschnitte (40, 50; 340, 350) in einer Richtung orthogonal zu den Kontaktflächen in einen verbundenen Zustand überführbar sind.

4. Auszugprofil nach Anspruch 3,
**dadurch gekennzeichnet, dass**
die Orthogonalverbindungsmittel (352a) an einem der Profilabschnitte (350) eine Rastnase (353) und am anderen Profilabschnitt (340) eine Rastschwelle umfasst, wobei die Rastnase (353) im Zuge des Zusammendrückens elastisch auslenkbar ist, so dass sie hinter der Rastschwelle einrasten kann und wobei die Rastnase (353) vorzugsweise derart angeordnet und ausgebildet ist, dass sie im Zuge des Zusammendrückens durch die Rastschwelle in Richtung oder entgegen der Richtung der Scharnierverbindungsmittel elastisch ausgelenkt wird.

5. Auszugprofil nach Anspruch 3,
**dadurch gekennzeichnet, dass**
die Orthogonalverbindungsmittel aufweisen:
- an einem der Profilabschnitte (50) einen zylindrischen Abschnitt (54), der sich in Richtung einer Flächennormalen der Kontaktfläche (50a) des Profilabschnitts zum anderen Profilabschnitt (40) erstreckt, und
- am anderen Profilabschnitt (40) mindestens zwei aufeinander zu gerichtete und auslenkbare Klemmzungen (46a), die derart angeordnet und ausgebildet sind, dass zwischen den Klemmzungen (46a) in einem unausgelenkten Zustand ein Aufnahmeraum gebildet wird, der kleiner als der Querschnitt des zylindrischen Abschnitts (54) ist.

6. Auszugprofil nach Anspruch 1,
**dadurch gekennzeichnet, dass**
die Verbindungsmittel Schiebeführungsverbindungsmittel (142a, 142b, 152a, 152b; 242a, 242b, 252a, 252b; 442a, 442b, 452a, 452b) aufweisen, die ein Einschieben des einen Profilabschnitts (140; 240; 440) in den anderen Profilabschnitt (150; 250; 450) in der Ebene der Kontaktflächen ermöglichen, wobei die Schiebeführungsverbindungsmittel vorzugsweise derart ausgebildet sind, dass sie im eingeschobenen Zustand einen Presssitz bilden, wobei die Schiebeführungsverbindungsmittel (242a, 242b, 252a, 252b; 442a, 442b, 452a, 452b) derart ausgebildet sind, dass einer der Profilabschnitt (240; 440) in einer von der Haupterstreckungsrichtung (2) abweichenden Einschieberichtung, vorzugsweise in einer zur Haupterstreckungsrichtung (2) orthogonalen Einschieberichtung, in den anderen Profilabschnitt (250; 450) einschiebbar ist.

7. Auszugprofil nach Anspruch 6,
**dadurch gekennzeichnet, dass**
die Schiebeführungsverbindungsmittel aufweisen:
- zwei Aufnahmen (252a, 252b; 452a, 452b), die in Einschiebrichtung (4) oder entgegen der Einschiebrichtung (4) offen sind und die in Einschieberichtung (4) voneinander beabstandet sind, und
- zwei Einfügeabschnitte (242a, 242b; 442a, 442b) zur Aufnahme in den Aufnahmen.

8. Auszugprofil nach Anspruch 6,
**dadurch gekennzeichnet, dass**
die Schiebeführungsverbindungsmittel (142a, 142b, 152a, 152b) derart ausgebildet sind, dass einer der Profilabschnitt (140) in Haupterstreckungsrichtung (2) in den anderen Profilabschnitt (150) einschiebbar ist.

9. Auszugprofil nach Anspruch 8,
**dadurch gekennzeichnet, dass**
die Schiebeführungsverbindungsmittel aufweisen:
- an einem der Profilabschnitte (150) zwei in Haupterstreckungsrichtung erstreckte Nuten (152a, 152b), deren offene Seite in entgegengesetzte Richtung weisen, und
- am anderen Profilabschnitt (140) Eingriffsabschnitte (142a, 142b) zur Aufnahme in den Nuten (152a, 152b).

10. Auszugprofil nach Anspruch 9,
**dadurch gekennzeichnet, dass**
die Nuten und die Eingriffsabschnitte jeweils mindestens zwei miteinander fluchtende Nutabschnitte bzw. Eingriffsabschnitte aufweisen, wobei zwischen den Nutabschnitten jeweils eine Beabstandung in Haupterstreckungsrichtung liegt, deren Länge größer oder gleich der Länge der Eingriffsabschnitte ist.

11. Auszugprofil nach einem der Ansprüche 6 bis 10,
**dadurch gekennzeichnet, dass**
die Schiebeführungsverbindungsmittel aufweisen:
- an einem der Profilabschnitte (240; 440) eine Arretierausnehmung (244; 444), die in Richtung des anderen Profilabschnitts (250; 450) offen ist, und
- am anderen Profilabschnitt (250; 450) ein Arretierabschnitt (254; 454) zur Aufnahme in der Arretierausnehmung (244; 444),
wobei die Arretierausnehmung und der Arretierabschnitt derart angeordnet sind, dass der Arretierabschnitt in die Arretierausnehmung einrasten kann, sobald der eine Profilabschnitt vollständig in den anderen Profilabschnitt eingeschoben ist.

12. Auszugprofil nach einem der vorstehenden Ansprüche,
**dadurch gekennzeichnet, dass**
zumindest ein Teil der Verbindungsmittel (46) an mindestens einem separaten Verbindungsabschnitt (44) vorgesehen ist, wobei der Verbindungsabschnitt (44) mit dem diesem Teil der Verbindungsmittel zugeordneten Profilabschnitt (40) verbindbar ausgebildet ist, wobei der separate Verbindungsabschnitt (44) vorzugsweise durch eine Schiebeführung (44a, 48) an dem zugeordneten Profilabschnitt (40) befestigbar ist, wobei die Schiebführung (44a, 48) vorzugsweise derart ausgebildet ist, dass der Verbindungsabschnitt (44) in der Ebene der Kontaktflächen (40a) und orthogonal zur Haupterstreckungsrichtung (2) in den Profilabschnitt (40) einschiebbar ist.

13. Auszugprofil nach einem der vorstehenden Ansprüche,
**dadurch gekennzeichnet, dass**
die Profilabschnitte (40, 50) aus Kunststoff gefertigt sind und der separate Verbindungsabschnitt (44) vorzugsweise aus Metall gefertigt ist.

14. Auszugprofil nach einem der vorstehenden Ansprüche,
**dadurch gekennzeichnet, dass**
die Kontaktflächen (40a, 50a) derart geformt sind, dass der Querschnitt des zwischen ihnen angeordneten Aufnahmeraums für das Flächengebilde (20) mindestens eine Richtungsänderung, vorzugsweise zwei oder mehr Richtungsänderungen, aufweist, wobei die Richtungsänderungen mehr als 45° betragen, vorzugsweise 90° oder mehr.

15. Beschattungssystem, bestehend aus einem
- Flächengebilde (20) und
- einem Auszugprofil (30) nach einem der vorstehenden Ansprüche,
wobei das Auszugprofil (30) am Ende des Flächengebildes (20) durch Einfassung des Flächengebildes fest mit diesem verbunden ist.

16. Beschattungssystem nach Anspruch 15,
**dadurch gekennzeichnet, dass**
das Flächengebilde (20) im Bereich von Verbindungsmitteln (54, 46, 49) des Auszugprofils Ausnehmungen (20a) aufweist.
